Europäisches Patentamt

European Patent Office

Office européen des brevets

(11) Numéro de publication : **0 012 688**
**B1**

(12) **FASCICULE DE BREVET EUROPÉEN**

(45) Date de publication du fascicule du brevet :
28.12.83

(51) Int. Cl.³ : **B 64 D   1/00, F 42 B   4/10**

(21) Numéro de dépôt : **79400998.5**

(22) Date de dépôt : **11.12.79**

(54) **Ensemble largable d'aéronefs.**

(30) Priorité : **12.12.78 FR 7834851**

(43) Date de publication de la demande :
**25.06.80 Bulletin 80/13**

(45) Mention de la délivrance du brevet :
**28.12.83 Bulletin 83/52**

(84) Etats contractants désignés :
**DE GB IT**

(56) Documents cités :
**FR-A- 2 315 434**
**US-A- 3 712 232**
**US-A- 3 964 700**

(73) Titulaire : **ETAT-FRANCAIS représenté par le DELE-GUE GENERAL POUR L'ARMEMENT**
**Bureau des Brevets et Inventions de la Délégation Générale pour l'Armement 14, rue Saint-Dominique F-75997 Paris Armées (FR)**

(72) Inventeur : **Tardot, Jacques**
**78 bis, rue Jean-Jaurès**
**F-16160 Gond Pontouvre (FR)**
Inventeur : **Lambert, Roger**
**73, le Bois du Maine**
**F-16800 Soyaux (FR)**

Jouve, 18, rue St-Denis, 75001 Paris, France

Ensemble largable d'aéronefs

La présente invention concerne un dispositif de largage d'une charge comprenant plusieurs éléments séparables, notamment d'une bouée d'écoute, et plus particulièrement un dispositif qui maintient la charge verrouillée pendant le stockage et qui puisse être déverrouillée facilement au moment du largage.

Avant d'être larguées ou jetées à la mer, par exemple à partir d'avions ou d'hélicoptères, les bouées d'écoute constituent des ensembles compacts comportant un équipement radio-électrique, disposés dans des corps étanches, et/ou un équipement électro-acoustique. Par exemple, le brevet FR 2 315 434 décrit une telle bouée acoustique largable d'avion.

Lors du contact avec l'eau ou le milieu de réception pour une charge terrestre, l'équipement électro-acoustique se détache de l'équipement radio-électrique, tout en demeurant relié à celui-ci par une liaison à la fois électrique et mécanique de suspension et descend dans l'eau jusqu'à une profondeur prédéterminée dans le cas d'une bouée d'écoute sous-marine. Cette liaison est généralement constituée par un câble lové.

L'équipement radio-électrique est relié mécaniquement et électriquement à une antenne qui doit rayonner des ondes hertziennes vers un aéronef d'exploitation.

Le problème essentiel que posent le stockage et la séparation des éléments d'un ensemble du type précité lors du largage réside dans le fait que cet ensemble ne doit pas être endommagé lors du stockage et/ou lorsqu'il entre en contact avec l'eau.

En effet, le stockage de telles parties d'un ensemble largable implique un dispositif de verrouillage apte à maintenir de façon sûre la charge verrouillée tout en étant facilement manœuvrable par les moyens usuels après le largage, ces moyens étant généralement une traction exercée par les suspentes du parachute ou autre organe de liaison. Dans la suite du texte, le terme « Charge » signifiera une des parties de l'ensemble largable.

La présente invention a pour objet un ensemble largable comportant une charge, un support de cette charge disposé selon l'axe longitudinal de la charge, l'axe étant défini par l'orientation prise par la charge lors du largage, un moyen de fixation de la charge sur le support, et une pièce mobile longitudinalement pour bloquer le mouvement du moyen de fixation dans sa position de fixation, le moyen de fixation étant un organe mobile sollicité par des moyens élastiques vers sa position de déblocage, la pièce étant verrouillée dans la position de blocage de l'organe mobile par des moyens de verrouillage avant le largage de l'ensemble largable, la pièce étant maintenue dans la position de blocage par une force vers le haut appliquée par un parachute pendant la descente jusqu'au moment du contact avec l'eau, caractérisé en ce que l'organe mobile est entraîné vers sa position de fixation par la pièce, que la pièce est déverrouillée au moment du largage, et que le mouvement de la pièce est dû aux moyens élastiques quant la force vers le haut appliquée par le parachute cesse.

Grâce à ces moyens et ceux décrits ultérieurement, l'effort du déblocage de la pièce est grand comparé à celui de rentrée de cette pièce. Ceci permet de maintenir le dispositif hors sécurité dans une grande gamme de valeurs de force.

De plus, le dispositif est irréversible, c'est-à-dire que, lorsque la pièce est en position d'ouverture, ce qui correspond à la séparation de la charge de son support, on ne peut plus malencontreusement verrouiller à nouveau à moins de recommencer manuellement et donc volontairement le verrouillage de la charge sur son support.

Un autre avantage réside dans le fait que le dispositif est très fiable et qu'il peut fonctionner un grand nombre de fois sans risque d'endommagement d'un élément constitutif quelconque.

D'autres avantages et caractéristiques ressortiront à la lecture de la description donnée ci-dessous à titre indicatif mais non limitatif de deux modes de réalisation suivant l'invention, ainsi que du dessin annexé sur lequel :

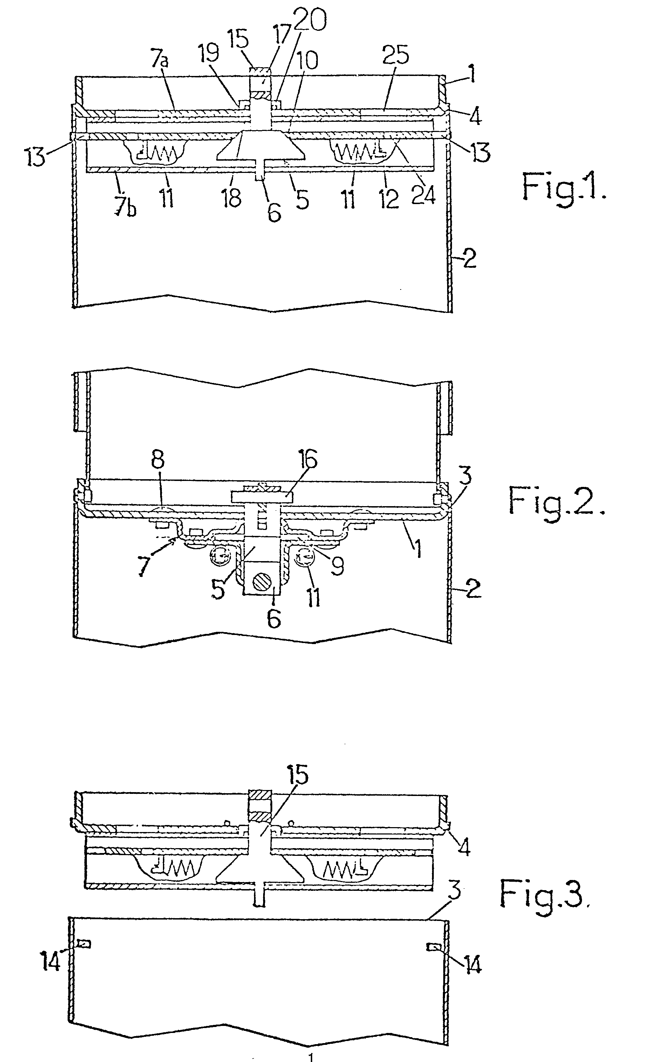

la figure 1 est une vue en coupe du dispositif selon un premier mode de réalisation de l'invention ;

la figure 2 est une autre vue en coupe du dispositif représenté sur la figure 1 ;

la figure 3 est une vue identique à celle de la figure 1 mais lors de la phase de séparation de la charge de son support ;

la figure 4 est une de dessus du support lors de la phase de séparation représentée sur la figure 3 ;

la figure 5 est une vue en coupe du dispositif selon un deuxième mode de réalisation de l'invention ;

la figure 6 est une vue identique à celle de la figure 5 mais lors de la phase de séparation de la charge de son support.

Le système de séparation d'une charge comprend un conteneur dans lequel sont logés le parachute ou autre moyen de ralentissement de la chute, le ballonnet de flottaison lorsque la charge est du type bouée d'écoute sous-marine, etc..., le fond (1) du conteneur servant également de support à la charge (2) dont seulement une partie est représentée, la charge comprenant tout l'équipement électrique nécessaire à sa fonction. La charge (2) vient s'appliquer par son bord supérieur (3) sur un rebord annulaire (4) prévu sur le fond (1).

Le dispositif de séparation assurant également un blocage comprend une pièce mobile (5) dont la queue (6) traverse un guide (7) fixé par tout moyen approprié tel que des rivets (8) sur le fond (1). De préférence, la partie supérieure (7a) du guide (7) est venue de fabrication avec le fond (1) de manière à réduire le coût de fabrication et de main d'œuvre de montage. Seule la partie inférieure (7b) du guide (7) est assemblée à la partie supérieure (7a) de façon à permettre à un moyen de fixation constitué par au moins un pène et de préférence deux pènes (9) de se déplacer uniquement dans un plan horizontal sans possibilité de débattement dans un plan vertical.

Les pènes (9) délimitent entre eux un espace (10) pour le passage d'une partie de la pièce (5) et sont sollicités chacun vers leur position de déblocage par un ressort (11) prenant appui sur les organes d'appui (12) solidaires du pène (9).

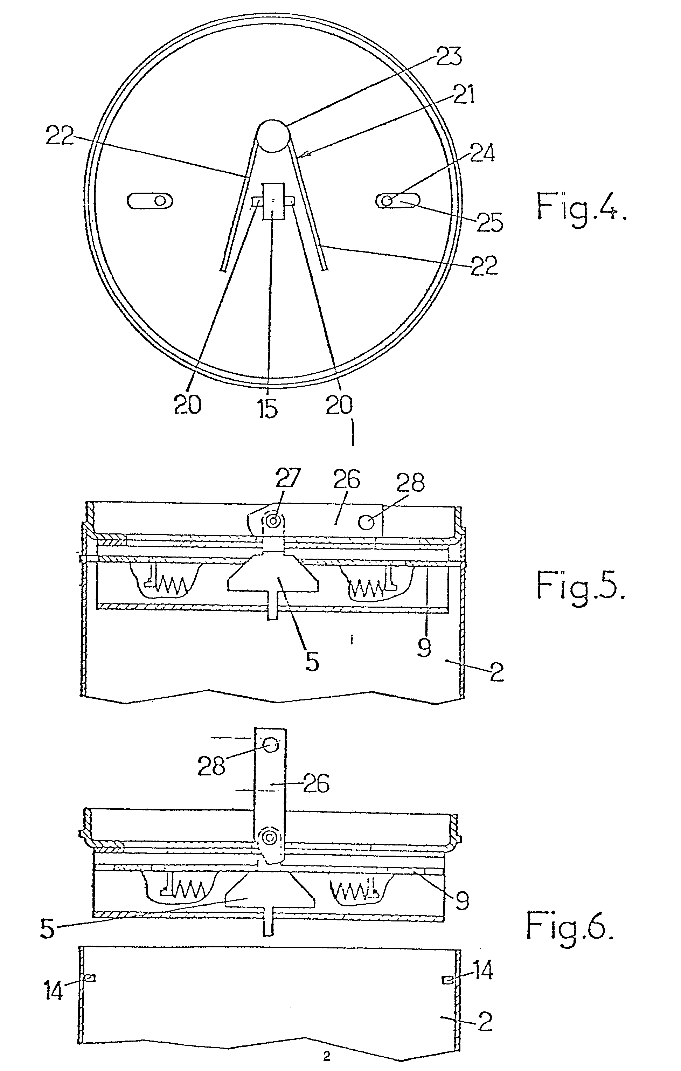

Les extrémités (13) des pènes (9) s'engagent, en position de blocage pour fixer la charge sur son support dans des orifices (14) ménagés dans le corps de la charge (2). La partie principale de la pièce (5) est de forme tronconique, la petite base étant engagée dans l'espace (10) et solidaire d'un élément d'attache (15) auquel est relié un organe de traction non représenté et constitué par exemple par une suspente d'un parachute ou d'une élingue solidaire du parachute logé dans le conteneur, la liaison entre l'élément d'attache (15) et l'organe de traction étant assurée par une manille (16) disposé dans l'ouverture (17) ménagée dans l'élément d'attache (15) qui traverse des orifices (18 et 19) ménagés respectivement sur la partie supérieure (7a) du guide (7) et sur le fond (1). Des pièces de retenue (20) sont prévues sur l'élément d'attache (15) et maintiennent pour la position verrouillée de la pièce (5) et pour la position de fixation des pènes, des moyens de verrouillage constitués par une épingle élastique (21) dont les branches élastiques (22) sont engagées sous les pièces de retenue (20) et en appui sur le fond (1) du support, l'épingle étant fixée par son extrémité (23) sur le fond (1) (figure 4).

Enfin, les pènes (9) comprennent chacun une ouverture (24) de commande de positionnement des extrémités (13) dans les orifices (14), l'accès à ces ouvertures (24) étant assuré par des ouvertures de forme oblongue (25) ménagées dans le fond (1) et le guide (7).

Le fonctionnement du dispositif est le suivant :

Pour le stockage de la charge (2), celle-ci est reliée au fond (1) du conteneur en déplaçant les extrémités (13) des pènes (9) dans leur ouverture respective, tout en amenant la pièce (5) dans la position haute et en disposant les branches (22) de l'épingle de blocage (21) sous les pièces de retenue (20).

Le positionnement des pènes (9) peut être effectué par le dessus, à travers les orifices d'accès (25), au moyen d'une pince par exemple. Dans cette position de fixation, les ressorts (11) tendent à confirmer la position basse de la pièce (5), en ce sens que les extrémités des pènes situés du côté de l'espace (10) tendent, par leur appui sur les côtés inclinés de la partie tronconique, à faire descendre davantage la pièce (5).

Lorsque la charge est larguée et qu'une traction suffisante est exercée sur l'élément d'attache (15), la pièce (5) est brusquement soulevée, ce qui permet aux branches (22) de s'écarter et de libérer la pièce qui peut, lorsque la traction cesse, retomber au fond du guide (Fig. 3) les pièces de retenue (20) s'engageant dans les orifices (18) et (19). Les pènes sont rappelés vers leur position débloquée par les ressorts (11) et se mettent en appui sur la petite base supérieure de la partie tronconique. Du fait de ce déplacement vers l'intérieur, les orifices (24) occupent la position représentée sur la fig. 4. Si une traction est à nouveau exercée sur la pièce (5), celle-ci ne peut être déplacée vers le haut en raison de la position qu'occupent les pènes (9). Les extrémités (13) des pènes (9), pendant ce déplacement intérieur, dégagent les orifices (14) du corps de la charge et cette dernière se détache de son support et se libère totalement.

Les moyens de verrouillage de la pièce (5) dans les positions de blocage et de déblocage des pènes peuvent être également constitués par ceux représentés sur les figs. 5 et 6.

L'élément d'attache (15) est articulé sur un levier (26) au moyen d'un axe (27), la plus grande partie du levier (26) reposant sur le fond (1) de manière à empêcher tout déplacement vers le bas de la pièce (5) pendant la phase de stockage ou de liaison de la charge (2) avec le conteneur.

De la même manière que précédemment, le déverrouillage s'obtient en exerçant une traction sur la pièce (5). Pour cela, l'élément de traction tel qu'une suspente d'un parachute ou une élingue, est attaché en (28) au levier (26). L'extrémité du levier opposée à l'orifice (28) repose légèrement sur le fond (1), pour la position de verrouillage. Cette extrémité est conformée de façon que lors du déblocage du pène (9), elle puisse s'engager dans les ouvertures (18) et (19), c'est-à-dire lorsque le levier (26) est dans la position verticale. En effet, la traction exercée vers le haut sur le levier (26) fait basculer ce dernier jusqu'à la position verticale. Pendant ce mouvement, les pènes (9) sont engagés davantage dans les orifices (14) du corps de la charge et fixent davantage la charge sur son support. Lorsque la traction cesse, la pièce (5) tombe par gravité au fond du guide (7), ce mouvement étant confirmé par l'action des ressorts (11) qui provoquent la rentrée, à l'intérieur des pènes (9) ce qui libère la charge (2) de son support (Fig. 6). Dans ce cas également, les pènes (9) viennent en appui sur la petite base supérieure de la partie tronconique de manière à éviter tout nouveau blocage et confirmer ainsi la libération de la charge.

## Revendications

1. Ensemble largable comportant une charge (2), un support (1) de cette charge (2) disposé selon l'axe longitudinal de la charge (2), l'axe étant défini par l'orientation prise par la charge (2) lors du largage, un moyen de fixation (9) de la charge (2) sur le support (1), et une pièce mobile (5) longitudinalement pour bloquer le mouvement du moyen de fixation (9) dans sa position de fixation, le moyen de fixation (9) étant un organe mobile sollicité par des moyens élastiques (11) vers sa position de déblocage, la pièce (5) étant verrouillée dans la position de blocage de l'organe mobile (9) par des moyens de verrouillage (20, 21, 22) avant le largage de l'ensemble largable, la pièce (5) étant maintenue dans la position de blocage par une force vers le haut appliquée par un parachute pendant la descente jusqu'au moment du contact avec l'eau, caractérisé en ce que l'organe mobile (9) est entraîné vers sa position de fixation par la pièce (5), que la pièce (5) est déverrouillée au moment du largage, et que le mouvement de la pièce (5) est dû aux moyens élastiques (11) quand la force vers le haut appliquée par le parachute cesse.

2. Ensemble selon la revendication 1, caractérisé en ce que l'organe mobile (9) est constitué par au moins un pène de blocage.

3. Ensemble selon la revendication 2, caractérisé en ce que les moyens élastiques (11) consistent en des ressorts.

4. Ensemble selon la revendication 1, caractérisé en ce que la pièce (5) est de forme tronconique, l'organe mobile (9) étant en appui par une de ses extrémités sur les côtés inclinés de la partie tronconique dans la position de blocage et sur un rebord annulaire dans la position de déblocage, le rebord constituant avec l'organe mobile (9) des moyens de blocages de la pièce (5) dans une position ouverte correspondant à la désolidarisation entre la charge (2) et le support (1).

5. Ensemble selon l'une des revendications 1 ou 4, caractérisé en ce que les moyens de verrouillage sont constitués par une épingle souple (21) dont chaque branche (22) est disposée en appui sur le support (1) et sous un organe de retenue (20) solidaire de la pièce (5).

6. Ensemble selon l'une des revendications 1 ou 4, caractérisé en ce que les moyens de verrouillage sont constitués par un levier (26) articulé sur la pièce (5), et présentant au moins une zone d'appui sur le support (1), cette zone d'appui étant située à l'extrémité du levier (26) opposé à un orifice d'accrochage (28) d'un élément de traction par rapport à l'axe d'articulation (27) du levier (26) sur la pièce (5), de façon que dans la position horizontale d'appui, le levier (26) immobilise la pièce (5) dans la position de blocage.

7. Ensemble selon l'une des revendications 1 à 4 caractérisé en ce que l'organe mobile (9) est monté dans un guide (7) solidaire du support (1).

8. Ensemble selon la revendication 7, caractérisé en ce qu'un élément (7a) du guide est d'une seule pièce avec le support (1).

9. Ensemble selon l'une des revendications 1 à 7, caractérisé en ce que l'organe mobile (9) comprend au moins un orifice (24) de mise en place dans la position de verrouillage.

10. Ensemble selon la revendication 9, caractérisé en ce que l'orifice (13) de mise en place est situé au-dessous d'orifices d'accès (25) ménagés dans le guide (7) et le support (1).

11. Ensemble selon la revendication 10, caractérisé en ce que les orifices d'accès (25) sont de forme oblongue.

## Claims

1. A jettisonable assembly comprising a load (2) ; a support (1) for said load (2), disposed along the longitudinal centerline of said load (2) ; said centerline being determined by the position of said load (2) at the moment of jettisoning ; a mounting (9) which attaches said load (2) to said support (1) ; a part (5) which can move in a longitudinal direction to block the movement of said mounting (9) in its attaching position ; an elastic mechanism (11), by means of which said mounting (9) is loaded towards its release position ; a locking mechanism (20, 21, 22) which locks said part (5) in the position in which it blocks said mobile component (9), as long as the assembly has not been jettisoned ; during the descent, said part being maintained in its blocking position by an upward force exerted by a parachute, until contact is made with water ; said assembly, wherein said part (5) drives said mobile component (9) towards its attaching position, said part (5) is unlocked when jettisoning occurs, and the movement of said part (5) is caused by said elastic mechanism (11), when said upward force exerted by said parachute ceases.

2. A jettisonable assembly set forth in claim 1, wherein said mobile component (9) consists of at least one latch bolt.

3. A jettisonable assembly set forth in claim 2, wherein said elastic mechanism (11) consists of springs.

4. A jettisonable assembly set forth in claim 1, wherein said part (5) has the shape of a truncated cone ; said mobile component (9) being in contact, through one of its ends, with the inclined surfaces of said cone in the blocking position, and with a circular lip in the release position ; said lip, with said mobile component (9) constituing the means of blocking said part (5) in an open position corresponding to separation of said load (2) from said support (1).

5. A jettisonable assembly set forth in either claim 1 or claim 4, wherein said locking mechanism consists of a flexible pin (21), each arm (22) of which is in contact, through its lower surface, with a retaining device (20) integral with said part (5).

6. A jettisonable assembly set forth in either claim 1 or claim 4, wherein said locking mechanism consists of a lever (26) hinged onto said part (5) and resting on said support (1) in at least one point, which is located, in relation to the hinge pin (27), which connects said lever (26) to said part (5), at the opposite end of said lever (26) from an eye (28) which serves to hook on a traction device, so that, in the horizontal contact position, said lever (26) immobilizes said part (5) in the blocking position.

7. A jettisonable assembly set forth in one of claims 1 to 4, wherein said mobile component (9) is mounted in a guide (7) integral with said support (1).

8. A jettisonable assembly set forth in claim 7, wherein one component (7a) of said guide is of a piece with said support (1).

9. A jettisonable assembly set forth in one of claims 1 to 7, wherein said mobile component (9) has at least one eye (24) for placing it in the locked position.

10. A jettisonable assembly set forth in claim 9, wherein the locating eye (13) is located below access ports (25) in said guide (7) and said support (1).

11. A jettisonable assembly set forth in claim 10, wherein said access ports (25) are oblong in shape.

## Ansprüche

1. Abwurfaggregat bestehend aus einer Last (2), einer Lasthalterung (1), die auf die Längsachse der Last (2) ausgerichtet ist, wobei diese Achse nach der beim Abwurf durch die Last (2) eingenommene Stellung bestimmt wird, einem Befestigungsmittel (9), das die Last (2) auf der Halterung (1) festhält, und einem in Längsrichtung beweglichen Teil (5), das das Befestigungsmittel (9) in Befestigungsstellung sperrt, wobei das Befestigungsmittel (9) ebenfalls ein bewegliches Teil ist, das ständig durch eine Spannvorrichtung (11) nach der Auslösestellung angezogen wird, das bewegliche Teil (5) vor dem Abwurf durch die Verriegelungsteile (20, 21, 22) in einer Stellung gehalten wird, wo es das bewegliche Teil (9) in Befestigungsstellung sperrt und nach dem Abwurf durch die vom Fallschirm ausgeübte Bremskraft weiterhin bis zum Auftreffen auf dem Wasser in seiner ursprünglichen Stellung gehalten wird, woraus sich folgender Ablauf ergibt : das Befestigungsteil (9) wird durch das Teil (5) in Befestigungsstellung gehalten, das Teil (5) wird beim Abwurf freigegeben und die Bewegung des Teils (5) wird durch die Spannvorrichtung (11) erzeugt, sobald der Fallschirm keine Bremskraft mehr ausübt.

2. Aggregat nach Anspruch 1, dadurch gekennzeichnet, dass das bewegliche Teil (9) aus mindestens einer Sperraste besteht.

3. Aggregat nach Anspruch 2, dadurch gekennzeichnet, dass die Spannvorrichtung (11) aus Federn besteht.

4. Aggregat nach Anspruch 1, dadurch gekennzeichnet, dass das Teil (5) sich nach oben verjüngt, wobei ein Ende des beweglichen Teils (9) in verriegelter Stellung an der konischen Fläche und in entriegelter Stellung an der zylindrischen Fläche anliegt, so dass zusammen mit dem beweglichen Teil (9) die zylindrische Fläche eine Sperrung des Teils (5) bewirkt und dasselbe in einer Stellung hält, die zu einer Trennung von Last (2) und Lasthalterung (1) führt.

5. Aggregat nach Anspruch 1 oder 4, dadurch gekennzeichnet, dass die Verriegelungsvorrichtung aus einem Federbügel (21) besteht, dessen beide Schenkel durch eine am Teil (5) angebrachte Einhängevorrichtung (20) mit der Halterung (1) in Anschlag gehalten werden.

6. Aggregat nach Anspruch 1 oder 4, dadurch gekennzeichnet, dass die Verriegelungsvorrichtung aus einem durch Gelenk auf dem Teil (5) befestigten Hebel (26) besteht, der an mindestens einer Stelle auf der Halterung (1) aufliegt und zwar mit dem Ende, das bezogen auf den Gelenkbolzen (27) zwischen Hebel (26) und Teil (5) der Öse (28) zum Einhängen der Zugvorrichtung gegenüberliegt, so dass in waagerechter Lage der Hebel (26) das Teil (5) in Verriegelungsstellung hält.

7. Aggregat nach Ansprüchen 1 bis 4, dadurch gekennzeichnet, dass das bewegliche Teil (9) in eine mit der Halterung (1) fest verbundenen Führung (7) eingebaut ist.

8. Aggregat nach Anspruch 7, dadurch gekennzeichnet, dass der Oberteil (7a) der Führung integrierender Bestandteil der Halterung (1) ist.

9. Aggregat nach den Ansprüchen 1 bis 7, dadurch gekennzeichnet, dass das bewegliche Teil (9) mindestens eine Öffnung (24) aufweist, durch welche die Verriegelung vorgenommen werden kann.

10. Aggregat nach Anspruch 9, dadurch gekennzeichnet, dass de Verstellungsöffnung (13) unterhalb der an der Führung (7) und der Halterung (1) vorgesehenen Zugansöffnung liegt.

11. Aggregat nach Anspruch 10, dadurch gekennzeichnet, dass die Zugangsöffnungen (25) als Langlöcher ausgelegt sind.

Fig.1.

Fig.2.

Fig.3.

Fig.4.

Fig.5.

Fig.6.